# EUROPÄISCHE PATENTSCHRIFT

(11) **EP 1 000 801 B1**
(45) Veröffentlichungstag und Bekanntmachung des Hinweises auf die Patenterteilung: **26.11.2003**
(21) Anmeldenummer: 00101236.8
(22) Anmeldetag: 21.05.1996
(51) Int. Cl.: B60P 1/44

(54) **Ladebordwandsystem**
Loading tail gate system
Système de hayon élévateur

(43) Veröffentlichungstag der Anmeldung: 17.05.2000
(62) Teilanmeldung aus: 96108052.0
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- DE-A- 2 654 286
- DE-A- 3 228 765
- DE-A- 3 228 829
- Super Mover 1500, Produktions AB Hydro Lif, Torshälla, Schweden XP002962648

## Beschreibung

Die Erfindung betrifft ein Ladebordwandsystem zur Befestigung an Fahrzeugen, insbesondere Lastkraftfahrzeugen, umfassend jeweils ein im wesentlichen parallelogrammförmiges, aus zwei im wesentlichen parallel voneinander beabstandeten Tragwerken bestehendes Hubund Klapptragwerk, eine im wesentlichen plattenförmige Ladebordwand zum Heben und Absenken einer Last und zum Verschließen eines Stauraumes des Fahrzeuges und eine Hubzylindereinrichtung zum Heben und Senken der Ladebordwand sowie eine Klappzylindereinrichtung zum Verschwenken der Ladebordwand von der Horizontalen in die Vertikale und umgekehrt, wobei das erste Tragwerk wenigstens einen Tragarm umfaßt, der über eine erste Drehachse am Fahrzeug befestigt ist und wobei ein zweites Ende der Hubzylindereinrichtung über eine Drehachse drehbar am Fahrzeug befestigt ist.

Ladebordwandsysteme ähnlicher Art sind seit langem bekannt ("Super Mover 1500", Produktions AB Hydro Lift, Torshälla, Schweden) und finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das gleiche gilt für den Beladungsvorgang eines Kraftfahrzeugs, d.h. die Last wird auf die sich auf der Fahrbahnebene befindende Ladebordwand aufgebracht, die Ladebordwand wird auf die Höhe der Ladeplattform des Lastkraftfahrzeuges angehoben und nachfolgend auf die Ladeplattform verbracht. Ist der Entlade- bzw. Beladevorgang beendet, wird die Ladebordwand aus der Horizontalen, in der sie sich zum Be- und Entladen befand, in die Vertikale verschwenkt, so daß die Ladebordwand als rückwärtiger Abschluß der Ladefläche bzw. eines kofferartig ausgestalteten Laderaumes dienen kann.

Für das Heben und Senken der Ladebordwand in im wesentlichen horizontaler Ausrichtung für den Be- und Entladevorgang von der Ebene der Ladefläche eines Lastkraftfahrzeuges auf den Straßenuntergrund und vom Straßenuntergrund auf die Ebene der Ladefläche wird eine sogenannte Hubzylindereinrichtung verwendet, die hydraulisch oder anderweitig betrieben wird. Für das Verschwenken der Ladebordwand für das Öffnen und Schließen des eigentlichen Laderaumes aus der Horizontalen in die Vertikale und umgekehrt wird eine hydraulisch oder anderweitig betriebene Klappzylindereinrichtung verwendet. Ladebordwandsysteme der vorbeschriebenen bekannten Art weisen somit zwei Zylindereinrichtungen auf, wobei regelmäßig die Hubzylindereinrichtung mit einem Tragwerk des parallelogrammförmigen Hub- und Klapptragwerks zusammenwirkt, wohingegen die Klappzylindereinrichtung mit dem anderen Tragwerk des Hub- und Klapptragwerkes zusammenwirkt.

Bei im Stand der Technik bekannten Ladebordwandsystemen der vorbeschriebenen Art treten bei Be- und Entladevorgang, d.h. also unter Einwirkung einer Kraft, die in Abhängigkeit des zu hebenden bzw. zu senkenden Transportguts erhebliche Größen aufweisen kann, Probleme dadurch auf, daß infolge der auf der Ladebordwand sich dabei befindenden Last ein Verbiegen der Ladebordwand relativ zur Ladefläche des Lastkraftfahrzeuges auftreten kann, so daß Spalte zwischen der Ladebordwand und der Ebene der Ladefläche sowohl in horizontaler Richtung als auch in vertikaler Richtung entstehen, die, bezogen auf die Breite der Ladeflächenöffnung zudem noch erheblich variieren können. Die Folge ist, daß insbesondere bei schweren Lasten, die mit der Ladebordwand in vertikaler Richtung, d.h. beim Be- und Entladen, transportiert werden müssen, regelrechte Schwellen zwischen der Ebene der Ladebordwand und der Ladefläche des Lastkraftfahrzeugs entstehen, so daß die Last vielfach über diese Schwelle, sei es mit Sackkarren, per Hand oder mittels anderer Hilfseinrichtung, regelrecht gewuchtet werden muß.

Dieses bringt große Gefahren für die Sicherheit des Ladeguts mit sich, da durch die Verkantung bei der Überwindung der Schwelle zwischen Ladeplattform und Ladeebene des Lastkraftfahrzeugs eine Beschädigung erfolgen kann und, was wenigstens gleichbedeutend nachteilig ist, eine große Gefahrenquelle für die Person darstellt, die diese Transportarbeiten ausführen muß, weil eine Gefahr des Einklemmens von Extremitäten wie Füßen und Händen mit beträchtlichen Unfall folgen befürchtet werden muß.

Der eigentliche Grund für das Auftreten der horizontalen und vertikalen Spalte, die zudem noch zur einen Seite der Breite der Ladefläche größer werden, hat konstruktionsbedingt seine Ursache darin, daß die Hubzylindereinrichtung und die Klappzylindereinrichtung seitlich zu den beiden das Hub- und Klapptragwerk bildenden einzelnen Tragwerken versetzt, d.h. quer zur Öffnung der Ladefläche bzw. quer zur Ladebordwand angeordnet sind, so daß aufgrund dieser Konstruktion unter Last beträchtliche Hebelkräfte auftreten können, die die vorbeschriebene Entstehung der horizontalen und vertikalen Spalte unter Last zur Folge haben.

Man hat dieses an sich gravierende Problem dadurch zu beheben versucht, daß man, ausgehend von einer mittleren zu erwartenden Belastung der Ladebordwand beim Heben und Senken einer Last, von vornherein die beiden das Hubund Klapptragwerk bildenden Tragwerke derart mit ihren einzelnen Elementen schräg versetzt einbaute, daß man bei der zu erwartenden mittleren Last, die mit der Ladebordwand anzuheben bzw. abzusenken ist, eine solche Verbiegung des Hub- und Klapptragwerks in Verbindung mit der Ladebordwand erreichte, daß unter diesen voraufgeschriebenen Bedingungen die Ladebordwand dann tatsächlich in einer Ebene mit der Ladeflächenebene verlief. Abgesehen davon, daß derartige konstruktive Kunstgriffe nur dann funktionieren, wenn genau die Belastung eingehalten wird, für die dieser konstruktionsbedingte Kunstgriff ausgelegt worden ist, hat die derartige bekannte technische Maßnahme den Nachteil, daß im unbelasteten Zustand die Ladebordwand in ihrer vertikalen Schwenkposition, d.h. zum Verschließen des Laderaums, diesen nicht richtig verschließt, was sich unter einem Winkel öffnende beidseitige Spalte zwischen vertikal verschwenkter Ladebordwand und der Beladeöffnung des Laderaumes des Lastkraftfahrzeugs zur Folge hat. Ein weiterer wesentlicher Nachteil besteht bei dieser bekannten Hilfskonstruktion darin, daß bei einer Belastung der Ladebordwand oberhalb der festgelegten Kraft und unterhalb wiederum die nachteiligen Spalte zwischen der Ladeebene des Kraftfahrzeuges und der Ebene der Ladebordwand auftreten, was wiederum die oben beschriebenen nachteiligen Folgen zeigt.

Es ist deshalb Aufgabe der vorliegenden Erfindung, ein Ladebordwandsystem der eingangs genannten Art zu schaffen, das die vorangehend beschriebenen Nachteile nicht aufweist, d.h. unabhängig von der auf der Ladebordwand beim Be- und Entladevorgang zu transportierenden Last keine Spalten vertikaler und horizontaler Richtung relativ zur Ladeebene eines Fahrzeugs zeigt, das im in die Vertikale verschwenkten Zustand der Ladebordwand keine Spalte zwischen der Ladebordwand und der Öffnung des Laderaums des Fahrzeugs zeigt, das einfach aufgebaut ist, einfach hergestellt werden kann und kostengünstig bereitstellbar ist, und das ein stabiles und sicheres Anheben und Absenken einer Last auf der Ladebordwand gewährleistet und ein sicheres Verschließen des Laderaumes eines Fahrzeuges gewährleistet.

Gelöst wird die Aufgabe gemäß der Erfindung dadurch, daß der Tragarm über eine zweite, am gegenüberliegenden Ende des Tragarms angeordnete zweite Drehachse mit dem ersten Ende der Hubzylindereinrichtung befestigt ist und der Tragarm mit einem Tragarm des zweiten Tragwerks über ein Verbindungselement verbunden ist.

Der Vorteil der erfindungsgemäßen Lösung ist der, daß dabei auf konstruktiv einfache Weise die Bedingung erfüllt wird, daß die Drehpunkte der Elemente des ersten Tragwerks sowie der Hubzylindereinrichtung in einer Ebene liegen und somit durch diese vorteilhafte Ausgestaltung eine einfach zu realisierende, aber sehr stabile konstruktive Lösung gefunden worden ist.

Vorzugsweise ist das Verbindungselement ein am Tragarm des ersten Tragwerks und/oder über ein am Tragarm des zweiten Tragwerks befestigtes Anschlußelement, wobei es ebenfalls vorteilhaft ist, daß das Verbindungselement zusätzlich die Funktion eines Unterfahrschutzes hat.

Gemäß einer vorteilhaften Ausgestaltung des Ladebordwandsystems liegen die Kräfteeinleitungspunkte der Hubzylindereinrichtung und der Klappzylindereinrichtung in das Hub- und Klapptragwerk jeweils in der Ebene der Drehpunkte A₁, C₁, D, E₁ bzw. A₂, B, C₂, E₂ der Elemente des jeweiligen ersten und zweiten Tragwerks, in der die Hubzylindereinrichtung (erstes Tragwerk) und die Klappzylindereinrichtung (zweites Tragwerk) in bezug auf die von Ihnen auf das Tragwerk bzw. in dem Tragwerk ausgeübten Kräfte einwirken. Das hat den Vorteil, daß aufgrund der Anordnung der im wesentlichen parallelogrammförmigen Tragwerke, die beide zusammen das Hub- und Klapptragwerk bilden, und der Anordnung der Hubzylindereinrichtung sowie der Klappzylindereinrichtung jeweils in der Drehebene des jeweiligen Tragwerks, d.h. also nicht in Querrichtung versetzt zueinander, keine Drehmomente in Querrichtung auftreten können, so daß gewährleistet ist, daß sich keine Spalte in vertikaler und horizontaler Richtung zwischen der Ladebordwand bei horizontaler Ausrichtung relativ zur Ladeebene eines Fahrzeugs ausbilden können und auch nicht sich öffnende Spalte bei vertikaler Ausrichtung der Ladebordwand im den Laderaum eines Fahrzeugs verschließenden Zustand. Ein weiterer wesentlicher Vorteil des erfindungsgemäßen Ladebordwandsystems besteht auch darin, daß dieses einfach konstruktiv ausgestaltet sein kann und aufgrund der gewählten Konstruktion auch keine ungleichmäßige Belastung auf das Hub- und Klapptragwerk ausgeübt wird, so daß dieses über lange Zeiträume stabil bleibt und somit auch ein notwendiger Wartungsaufwand auf ein Minimum reduziert wird.

Schließlich ist es von sehr wesentlichem Vorteil, daß bei einem derart ausgebildeten Ladebordwandsystem kein Achskörper vorgesehen zu werden braucht, der, wie die Praxis gezeigt hat, sich als für derartige Systeme äußerst nachteilig und hinderlich erwiesen hat.

Gemäß einer vorteilhaften Ausgestaltung des Ladebordwandsystems umfaßt das erste Tragwerk zwei im wesentlichen parallel voneinander beabstandete erste Tragwerke.

Bei einer weiteren anderen vorteilhaften Ausgestaltung des Ladebordwandsystems umfaßt das erste Tragwerk einen zweiten Tragarm, der an seinem ersten Ende mit beiden ersten Tragarmen verbunden ist, wobei das zweite Ende eine im wesentlichen orthogonal zu den beiden ersten Tragarmen verlaufende Drehachse aufweist, über die der zweite Tragarm drehbar mit der Ladebordwand befestigt ist. Auch hier gilt, daß grundsätzlich der zweite Tragarm an sich beliebig geeignet ausgestaltet sein kann, die erfindungsgemäß vorgeschlagene vorteilhafte Lösung sichert aber auch hier auf einfache konstruktive Weise, daß die Bedingung auf einfache Weise eingehalten werden kann, daß die Drehpunkte der Elemente des ersten Tragwerks, in der auch die Hubzylindereinrichtung angeordnet ist, in einer Ebene liegen.

Vorteilhaft ist es, daß der zweite Tragarm im wesentlichen in der Mittelebene zwischen den beiden ersten Tragarmen angeordnet ist, womit eine sehr einfache und kostengünstige Ausbildung und Integration des zweiten Tragarms in das erste Tragwerk erreichbar ist.

Bei einer noch anderen weiteren vorteilhaften Ausführungsform des Ladebordwandsystems umfaßt das zweite Tragwerk zwei im wesentlichen parallel voneinander beabstandete erste Tragarme, wobei die ersten Tragarme über eine erste Drehachse am Fahrzeug drehbar befestigt sind und über eine zweite, am anderen Ende der ersten Tragarme angeordnete zweite Drehachse, die im wesentlichen orthogonal zu den ersten Tragarmen und parallel zur ersten Achse verläuft, drehbar mit der Ladebordwand befestigt sind. Auch hier gilt, was schon vorangehend im Zusammenhang mit dem ersten Tragwerk ausgeführt worden ist, daß auf die vorbeschriebene Weise das zweite Tragwerk ebenfalls konstruktiv sehr einfach ausgebildet sein kann, um die Bedingung zu erfüllen, daß die Drehpunkte der Elemente des zweiten Tragwerks, in der auch die Klappzylindereinrichtung als Teil des Parallelogramms des zweiten Tragwerks angeordnet ist, in einer Drehebene liegen können, obwohl grundsätzlich auch andere Konstruktionen denkbar sind, die die voraufgeführte Grundbedingung der erfindungsgemäß vorgeschlagenen Lösung erfüllen können. Die hier aber vorteilhaft vorgeschlagene Lösung ist grundsätzlich bei einfacher konstruktiver Ausgestaltung sehr stabil und somit verhältnismäßig kostengünstig herstellbar.

Schließlich ist es vorteilhafterweise möglich, daß bei dem Ladebordwandsystem die Klappzylindereinrichtung, die an ihrem ersten Ende drehbar am Fahrzeug befestigt ist, mit ihrem zweiten Ende um eine Drehachse im wesentlichen orthogonal zur Längsachse der Klappzylindereinrichtung drehbar mit der Ladebordwand befestigt ist, wobei die Längsachse im wesentlichen in der die Schwenkebene bildenden Ebene des zweiten Tragwerks verläuft. Auch hier gilt wiederum, daß grundsätzlich auch bezüglich dieses Punktes das zweite Tragwerk konstruktiv sehr einfach zur Erfüllung der Bedingung, daß die Drehpunkte der Elemente des zweiten Tragwerks, dessen Teil auch die Klappzylindereinrichtung ist, erfüllt ist, ausgebildet werden kann, obwohl grundsätzlich auch hier andere konstruktive Lösungen möglich sind, die die Grundbedingung erfüllen.

Die eigentliche konstruktive Ausgestaltung der Tragarme kann auf beliebige geeignete Weise gewählt werden, d.h. diese Tragarme können als Formteile beispielsweise aus Stahlguß oder dergleichen hergestellt werden, es hat sich jedoch als sehr vorteilhaft herausgestellt, die Tragarme im wesentlichen plattenförmig auszubilden, so daß diese aus plattenförmigen Halbzeugen, beispielsweise aus Stahlplatten oder sonstigen beliebigen anderen geeigneten plattenförmigen Werkstoffen, durch Ausschneiden oder Ausstanzen auf einfache und damit kostengünstige Weise hergestellt werden können. Vorteilhafterweise gilt gleiches auch für den zweiten Tragarm des ersten Tragwerkes.

Das erfindungsgemäße Ladebordwandsystem kann grundsätzlich auf beliebige geeignete Weise an einer Tragkonstruktion eines Fahrzeugs befestigt werden, an der normalerweise Ladebordwandsysteme dieser Art befestigt werden. Regelmäßig werden die Tragwerke eines Fahrzeugs durch zwei in Fahrzeuglängsrichtung angeordnete, parallel voneinander beabstandete U-profilförmige Träger gebildet, die auch die Antriebsachse bzw. Achsen des Fahrzeugs aufnehmen. Vielfach werden Ladebordwandsysteme dieser Art entweder direkt an derartigen Tragwerken durch Schraub- und/oder Schweißverbindungen befestigt oder aber mittels mehr oder weniger aufwendiger Befestigungskonstruktionen.

Um die Befestigung des Ladebordwandsystems sehr einfach und kostengünstig ausbilden zu können, so daß auch eine nachträgliche Montage der Ladebordwand am Tragwerk möglich ist, was gleichermaßen auch für eine Demontage wichtig ist, erfolgt vorteilhafterweise die Befestigung des ersten und des zweiten Tragwerks der Ladebordwand am Fahrzeug über jeweils ein gesondertes Befestigungselement, wobei das Befestigungselement selbst ein Teil des parallelogrammförmigen jeweiligen Tragwerks ist, so daß auch dafür keine gesonderten Tragwerkelemente vorgesehen werden müssen und über das Befestigungselement eine einfache und schnelle Befestigung am Tragwerk möglich ist.

Das Befestigungselement selbst kann an sich eine beliebige geeignete konstruktive Struktur aufweisen, es hat sich jedoch als vorteilhaft herausgestellt, dieses plattenförmig auszubilden, was wiederum eine einfache Herstellbarkeit, beispielsweise durch Stanzung oder Ausschneiden aus plattenförmigen Halbzeugen oder Werkstoffplatten, zur Folge hat.

Um die Biegesteifigkeit des Befestigungselements auf sehr einfache Weise zu erhöhen und das Einleiten von Kräften, die durch das Ladebordwandsystem und die darauf transportierte Last entstehen, in die Tragrahmen des Fahrzeugs und somit in das Fahrzeug stark zu vermindern, verläuft das Befestigungselement längs einer im an das Fahrzeug angebauten Zustand im wesentlichen vertikal verlaufenden Knick- oder Kantlinie mit einem ersten Teil in Richtung auf den Tragrahmen des Fahrzeugs zu und ist mit einem zweiten Teil, an dem das Tragwerk befestigt ist, im wesentlichen parallel zum Tragrahmen ausgerichtet, wobei zwischen beiden Teilen ein stumpfer Winkel ∝ gebildet wird.

Vorzugsweise ist das Befestigungselement mit dem Tragarmen eines Fahrzeugs über ein gesondertes Verbindungselement fest verbindbar, das unmittelbar an den konstruktiven Aufbau der Tragrahmen des jeweiligen Fahrzeugs, an dem das erfindungsgemäße Ladebordwandsystem montiert werden soll, angepaßt werden kann. Dadurch ist es möglich, die gesamte übrige Konstruktion des Ladebordwandsystems einheitlich auszubilden, so daß gegebenenfalls nur diese Verbindungselemente an den unterschiedlichen Aufbau der Tragrahmen des Fahrzeugs, an dem das Ladebordwandsystem montiert werden soll, angepaßt zu werden brauchen.

Das Verbindungselement hat vorzugsweise eine plattenförmige Struktur und kann wiederum durch Stanzung auf einfache Weise aus plattenförmigen Halbzeugen oder plattenförmigen Werkzeugen schlechthin hergestellt werden.

Um bei einer einfachen Ausbildung des Verbindungselements ein Optimum an Festigkeit, insbesondere Biegefestigkeit, zu erreichen, weist das Verbindungselement wenigstens einen im wesentlichen quer zum Fahrzeug ausgerichteten ersten Schenkel auf, wobei das Befestigungselement im Bereich seiner Knick- oder Kantlinie wenigstens mit dem freien Ende des Schenkels verbunden ist. In dem Bereich der Knick- oder Kantlinie kann das Befestigungselement auf sehr einfache Weise mit dem Verbindungselement durch Schweißung verbunden werden, es ist aber auch möglich, in diesem Bereich ein Winkelprofil vorzusehen, das einerseits mit dem zweiten Teil des Befestigungselements verbindbar ist und andererseits mit dem ersten Schenkel des Verbindungselements, wobei ein derartiges Winkelprofil auch über Schweißung mit dem Verbindungselement und dem Befestigungselement verbunden werden kann, oder aber mittels Schraubverbindungen, wobei das Winkelprofil noch zur Verbesserung der Knickfestigkeit und Eigenstabilität des Verbunds aus Verbindungselement und Befestigungselement beiträgt.

Bei einer anderen vorteilhaften Konstruktion, bei der noch größere Kräfte durch das Ladebordwandsystem und die darauf zu transportierende Last in die Tragrahmen des Fahrzeugs eingeleitet werden müssen, d.h. bei einer Konstruktion, die insgesamt noch stabiler ausgebildet werden muß, ist es vorteilhaft, daß das Verbindungselement einen im wesentlichen quer zum Fahrzeug ausgerichteten zweiten Schenkel aufweist, wobei das Befestigungselement mit dem freien Ende seines ersten Teils, das abgewinkelt ausgebildet ist, mit dem zweiten Schenkel verbunden ist. Darüber hinaus eignet sich die voraufgeführte vorteilhafte Ausführungsform in Verbindung mit dem vorher ebenfalls schon beschriebenen gesonderten Winkelprofilelement zwischen Verbindungselement und Befestigungselement auch zur einfachen Überbrückung von unterschiedlich weit voneinander beabstandeten Tragrahmen des Fahrzeugs, indem nämlich das Winkelprofil einerseits an einem Schenkel des Verbindungselements und das abgewinkelte freie Ende des ersten Teils des Befestigungselements am zweiten Schenkel des Verbindungselements in unterschiedlichem Abstand zur Basis des Verbindungselements befestigt werden können, je nach Abstand der beiden jeweils angetroffenen Tragrahmen des Fahrzeugs voneinander.

Wie vorangehend schon erwähnt, kann das Befestigungselement mit dem Tragrahmen eines Fahrzeugs über die vorbeschriebene feste Verbindung mittels der Verbindungselemente befestigt werden, beispielsweise über Schraubverbindungen und/oder eine Schweißverbindung. Da aber Schraubverbindungen und Schweißverbindungen eine sehr genaue Justage und eine sehr genaue Fixierung der Befestigungspunkte vor dem eigentlichen Befestigungsvorgang erfordern und vielfach eine Ausführung von Befestigungsbohrungen im Tragrahmen des Fahrzeugs aus Festigkeitsgründen unerwünscht ist, was gleichermaßen für die Ausführung von Schweißverbindungen am Tragrahmen gilt, wird vorgeschlagen, das Ladebordwandsystem derart auszubilden, daß vorzugsweise die Befestigungselemente mit dem Tragrahmen eines Fahrzeugs über klauenartig ausgestaltete Klemmelemente, die über horizontale Stege des Tragrahmens des Fahrzeugs greifen, lösbar befestigbar sind. Auf diese Weise ist es möglich, daß unter Erreichen einer hohen Befestigungsstabilität und einer sehr hohen Sicherheit während des Betriebes des Ladebordwandsystems an einem Fahrzeug dennoch eine einfache Befestigbarkeit erreicht wird, die sowohl das Montieren als auch das Demontieren auf sehr einfache Weise erlaubt, wobei aber der Tragrahmen des Fahrzeugs weder angebohrt werden muß noch mit Schweißnähten beaufschlagt werden muß, so daß dieser auch bei montiertem erfindungsgemäßen Ladebordwandsystem seine ursprüngliche Stabilität ohne Einschränkungen behält.

Die Erfindung wird nun unter Bezugnahme auf die nachfolgenden schematischen Zeichnungen anhand eines Ausführungsbeispieles im einzelnen beschrieben. Darin zeigen:
- Fig. 1: in perspektivischer Darstellung ein Ladebordwandsystem gemäß der Erfindung, das über klauenartig ausgestaltete Klemmelemente an horizontalen Stegen des Tragrahmens eines Fahrzeugs befestigt ist, wobei die Ladebordwand sich im abgesenkten Zustand befindet,
- Fig. 2: in perspektivischer Darstellung im Ausschnitt ein erstes Befestigungselement, das über Schraubverbindungen am Tragrahmen des Fahrzeugs befestigbar ist,
- Fig. 3: in perspektivischer Darstellung im Ausschnitt ein zweites Befestigungselement, das über Schraubverbindungen am Tragrahmen des Fahrzeugs befestigbar ist, wobei die hier gezeigte Ausführungsform des Befestigungselements für größere Belastungen ausgelegt ist als die in Fig. 2 dargestellte,
- Fig. 4: in perspektivischer Darstellung im Ausschnitt eine Darstellung eines Teils des Ladebordwandsystems gemäß Fig. 1,
- Fig. 5: ein Schema der Elemente des ersten Tragwerks und des zweiten Tragwerks sowie der daran angreifenden Hubzylindereinrichtung und der ein Teil des zweiten Tragwerks bildenden Klappzylindereinrichtung und
- Fig. 6: in perspektivischer Darstellung das erste Tragwerk, gebildet aus zwei ersten Tragarmen sowie einem zweiten Tragarm, wobei der vordere erste Tragarm zum besseren Verständnis des konstruktiven Aufbaus des ersten Tragwerks teilweise im Ausschnitt dargestellt ist.

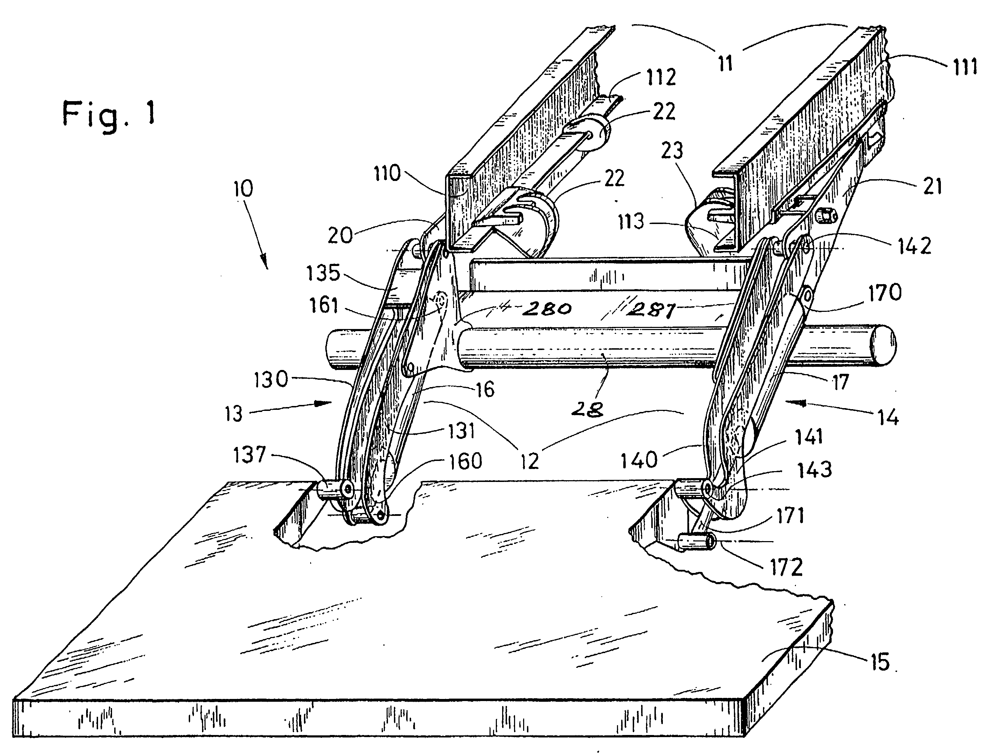

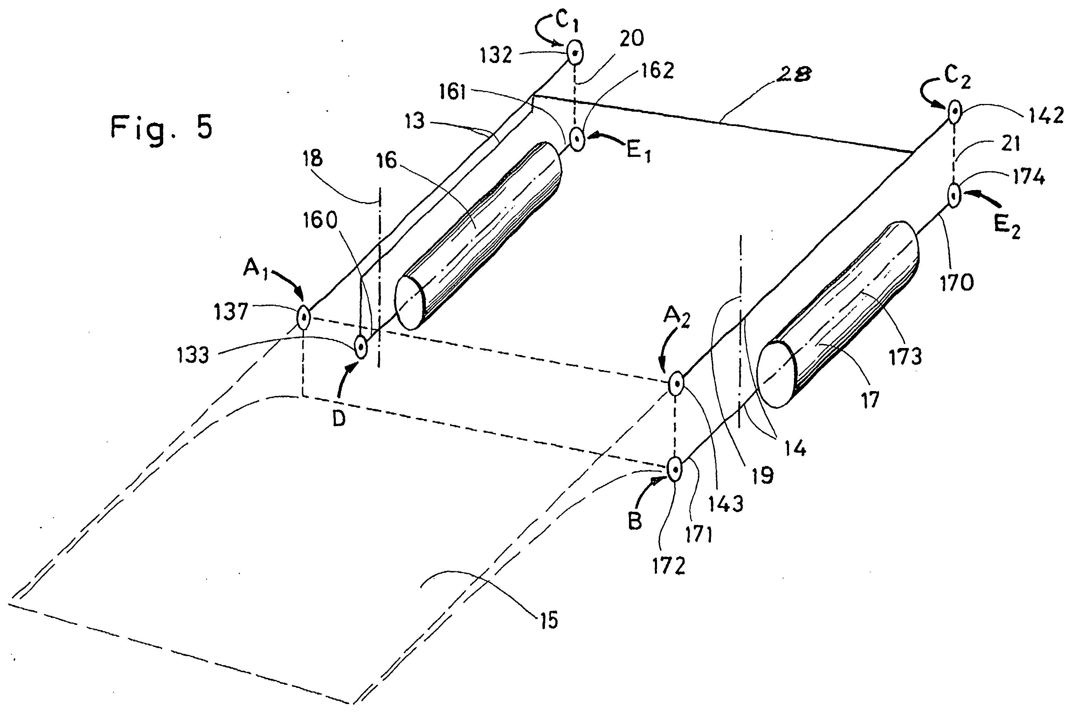

Es wird zunächst Bezug genommen auf das in Fig. 1 dargestellte Ladebordwandsystem 10, das anhand dieser Darstellung bezüglich seines grundsätzlichen Aufbaus beschrieben wird. Das Ladebordwandsystem 10 umfaßt im wesentlichen ein Hub- und Klapptragwerk 12, das wiederum aus einem ersten Tragwerk 13 und einem zweiten Tragwerk 14 besteht, die im wesentlichen parallel voneinander beabstandet an einem Fahrzeug 11 über Befestigungselemente 20, 21 befestigt werden, wobei auf die Befestigung im einzelnen noch weiter unten eingegangen wird. Das erste und das zweite Tragwerk 13, 14 bilden zusammen mit den Befestigungselementen 20, 21, das zweite Tragwerk 14 zusätzlich noch zusammen mit einer Klappzylindereinrichtung 17 eine parallelogrammförmige Struktur, wie sie insbesondere aus Fig. 5 ersichtlich ist, worauf aber im einzelnen ebenfalls noch weiter unten eingegangen wird. Mit dem ersten und zweiten Tragwerk 13, 14 ist eine im wesentlichen plattenförmige Ladebordwand 15 zum Heben und Absenken einer Last (ohne Last dargestellt) und zum Verschließen eines Stauraumes des Fahrzeugs 11 drehbar verbunden. Mit dem ersten Tragwerk 13 wirkt eine Hubzylindereinrichtung 16 zum Heben und Senken der Ladebordwand 15 zusammen. Die Klappzylindereinrichtung 17, die zum Verschwenken der Ladebordwand von der Horizontalen in die Vertikale und umgekehrt dient, wirkt mit dem zweiten Tragwerk 14 zusammen und ist Teil seiner parallelogrammförmigen Struktur.

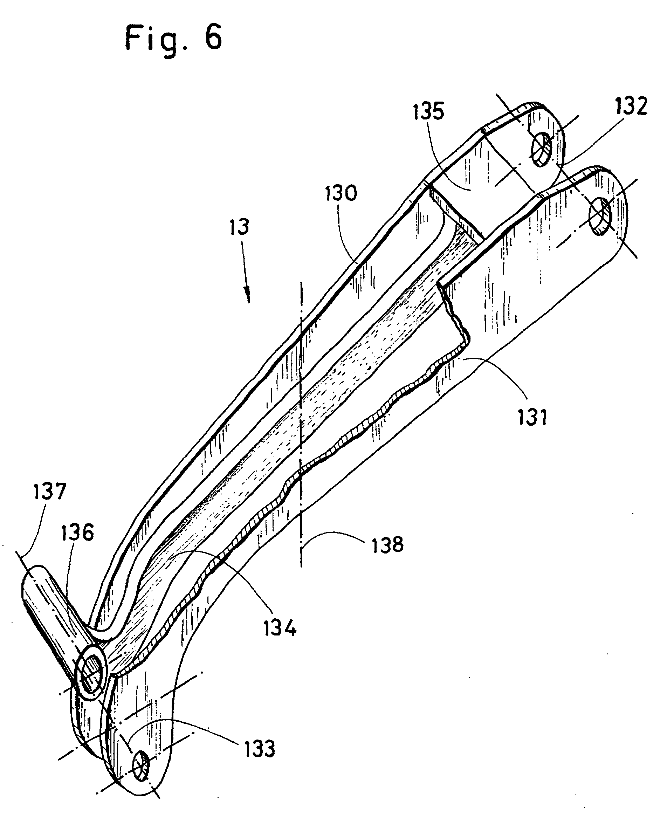

Das erste Tragwerk 13, in den Figuren 1 und 5 links dargestellt, umfaßt zwei im wesentlichen parallel voneinander beabstandete Tragwerke 130, 131, die über eine erste Drehachse 132 am Befestigungselement 20 drehbar befestigt sind. Die am entgegengesetzten Ende der ersten Tragarme 130, 131 ausgebildete zweite Drehachse 133 ist mit dem ersten Ende 160 der Hubzylindereinrichtung 16 befestigt, vergleiche auch Fig. 6. Das zweite Ende 161 der Hubzylindereinrichtung 16 ist ebenfalls drehbar am Befestigungselement 20 befestigt.

Im wesentlichen in der Mittelebene 138 zwischen den ersten Tragarmen 130, 131 ist ein zweiter Tragarm 134 vorgesehen, vergleiche auch Fig. 6. Der zweite Tragarm 134 ist mit seinem ersten Ende 135 mit den beiden ersten Tragarmen 130, 131 derart befestigt, daß eine traversenartige Überbrückung beider ersten Tragarme 130, 131 erreicht wird. Das zweite Ende 136 des zweiten Tragarmes 134 ist über eine im wesentlichen orthogonal zu den ersten beiden Tragarmen 130, 131 verlaufende Drehachse 137 drehbar mit der Ladebordwand 15 befestigt.

Das zweite Tragwerk 14, das ähnlich wie das erste Tragwerk 13 ausgebildet ist, weist wiederum zwei im wesentlichen parallel voneinander beabstandete erste Tragarme 140, 141 auf, die über eine erste Drehachse 142 am Befestigungselement 21 drehbar befestigt sind. Die am anderen Ende der ersten Tragarme 140, 141 vorgesehene zweite Drehachse 143 ist im wesentlichen orthogonal zu den ersten Tragarmen 140, 141 ausgebildet und verläuft im wesentlichen parallel zur ersten Drehachse 142. Über die Drehachse 143 sind die beiden ersten Tragarme 140, 141 drehbar mit der Ladebordwand 15 befestigt.

Gewissermaßen als ein Schenkel des parallelogrammförmig ausgebildeten zweiten Tragwerks ist die Klappzylindereinrichtung 17 vorgesehen, vergleiche auch Fig. 5, die an ihrem ersten Ende 170 um eine Drehachse 174 drehbar am Befestigungselement 21 befestigt ist. Mit ihrem zweiten Ende 171 ist die Klappzylindereinrichtung 17 um eine Drehachse 172, die im wesentlichen orthogonal zur Längsachse 173 der Klappzylindereinrichtung 17 ausgebildet ist, drehbar mit der Ladebordwand 15 befestigt. Die (gedachte) Längsachse 173 verläuft im wesentlichen in der die Schwenkebene bildenden Ebene 19 des zweiten Tragwerks 14, vergleiche die strickpunktierte Linie in Fig. 5.

Es wird nun Bezug genommen auf Fig. 5, in der das Hebelschema des parallelogrammförmigen Hub- und Klapptragwerks 12, d.h. des ersten Tragwerks 13 und des zweiten Tragwerks 14, in Verbindung mit der daran angreifenden Hubzylindereinrichtung 16 sowie der zum zweiten Tragwerk integral gehörenden Klappzylindereinrichtung 17 gezeigt ist. Die Kräfteeinleitungspunkte der Hubzylindereinrichtung 16 und der Klappzylindereinrichtung 17 in das Hub- und Klapptragwerk 12 liegen in der jeweiligen Ebene 18 der Drehpunkte A₁, C, C₁, D, E₁ der Drehachsen 137, 132, 133, 162 des ersten Tragwerks 13 bzw. in der Ebene 19 der Drehpunkt A₂, B, C₂, E₂ der Achsen 143, 172, 142, 174 des zweiten Tragwerks 14.

Es war oben schon ausgeführt worden; daß der Tragarm 130; 131 über die zweite am gegenüberliegenden Ende des Tragarms 130; 131 angeordnete Drehachse 133 mit dem ersten Ende 160 der Hubzylindereinrichtung 16 befestigt ist. Der Tragarm 130; 131 ist mit dem Tragarm 140; 141 des zweiten Tragwerks 14 über ein Verbindungselement 28 verbunden. Das Verbindungselement 28 selbst ist über ein am Tragarm 130; 131 des ersten Tragwerks 13 und/oder über ein am Tragarm 140; 141 des zweiten Tragwerks 14 befestigtes Anschlußelement 280; 281 befestigt.

Das Verbindungselement 28 hat zusätzlich die Funktion eines Unterfahrschutzes.

Bedingt durch den konstruktiven Aufbau, daß die Kräfteeinleitungspunkte der jeweiligen Tragwerke 13, 14 in der Ebene der Drehpunkte zum jeweiligen Tragwerk 13, 14 gehörenden Elemente liegen, kann bei auf der Ladebordwand 15 befindlicher Last das nachteilige Drehmoment nicht entstehen, so daß ein Spalt bzw. Spalt in vertikaler und horizontaler Richtung zwischen horizontal ausgerichteter Ladebordwand 15 und einer hier nicht dargestellten Ladeebene des Fahrzeugs 11 im angehobenen Zustand des Hub- und Klapptragwerks 12 nicht auftreten und auch dann nicht, wenn die Ladebordwand 15 aus der Horizontalen in die Vertikale durch Betätigung der Klappzylindereinrichtung 17 verschwenkt worden ist.

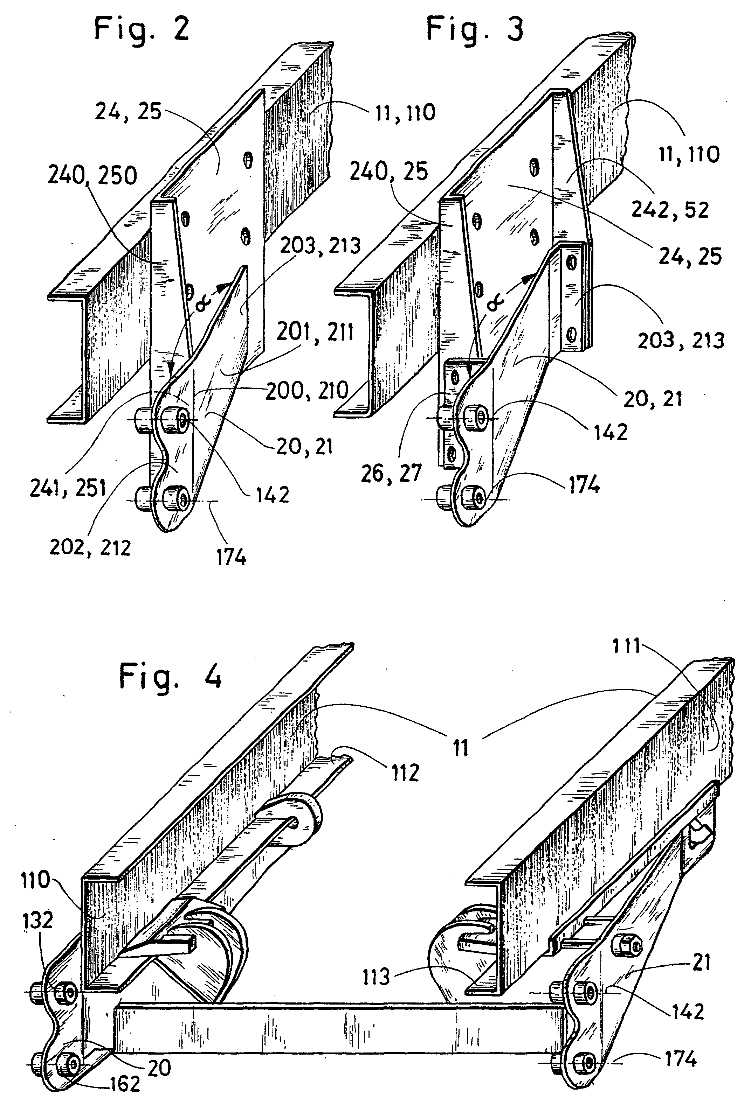

Teil der parallelogrammförmig strukturierten Tragwerke 13, 14 sind die jeweiligen Befestigungselemente 20, 21, vergleiche insbesondere die Figuren 2, 3 und 4 sowie Fig. 5. Diese hier das Tragwerk 13, 14 ebenfalls mitausbildenden Befestigungselemente 20, 21 können aus flachen blechförmigen Elementen ausgebildet sein, in denen Achsbuchsen für die Drehachsen 132, 162, 142, 174 auf einfache Weise aufgenommen werden können. Die Befestigung der Befestigungselemente 20, 21 am Tragrahmen 110, 111 kann, wie in den Figuren 2 und 3 dargestellt ist, über Schraubverbindungen erfolgen, wobei dann aber der Tragrahmen 110, 111 des Fahrzeugs 11 mit entsprechenden Durchgangsöffnungen zur Aufnahme der hier nicht dargestellten Schraubenmutterverbindungen durchbohrt werden muß.

Die beiden in den Figuren 2 und 3 dargestellten Befestigungsvarianten des Befestigungselements 20, 21 weisen im an das Fahrzeug 11 bzw. den Trahrahmen 110, 111 angebauten Zustand eine im wesentlichen vertikal, d.h. orthogonal zu den Tragrahmen 110, 111, verlaufende Knick- oder Kantlinie 200, 210 auf. Das so gebildete erste Teil 201, 211 des Befestigungselements 20, 21 verläuft somit in Richtung auf den Tragrahmen 110, 111 des Fahrzeugs 11 zu, wohingegen das zweite Teil 202, 212 des Befestigungselements 20, 21, an dem das Tragwerk 13, 14 befestigt ist, im wesentlichen parallel zum Tragrahmen 110, 111 ausgerichtet ist. Somit wird zwischen den beiden Teilen 201, 211; 202, 212 ein stumpfer Winkel ∝ gebildet.

Bei der in Fig. 2 dargestellten Ausgestaltung des Befestigungsbereichs des Ladebordwandsystems an den Tragrahmen 110, 111 des Fahrzeugs 10 ist ein im Querschnitt L-profilförmig ausgebildetes Verbindungselement 24, 25 vorgesehen, wobei das Verbindungselement 24, 25 derart am Tragrahmen 110, 111 befestigt ist, daß der dort ausgebildete erste Schenkel 240, 250 quer vom Tragrahmen 110, 111 wegsteht. Das Befestigungselement 201, 211 ist im Bereich seiner Knick- oder Kantlinie 200, 210 mit dem freien Ende 241, 251 des Schenkels 240, 250 verbunden, beispielsweise mittels einer hier nicht gesondert dargestellten Schweißnaht oder einer Schraubverbindung, wobei auch das freie Ende 203, 213 des ersten Teils 201, 211 des Befestigungselements 20, 21 am plattenförmigen Basisteil des Verbindungselements 24, 25 durch Schweißung oder eine sonstige geeignete Verbindung befestigt ist.

Die in Fig. 3 dargestellte Ausgestaltung des unmittelbaren Befestigungsbereichs des Ladebordwandsystems 10 an den Tragrahmen 110, 111 des Fahrzeugs 10 ist ähnlich aufgebaut wie die in Fig. 2 dargestellte Ausgestaltung, das in Fig. 3 dargestellte Verbindungselement 24, 25 weist jedoch einen ebenfalls im wesentlichen quer zur Basis des Verbindungselements 24, 25 und somit im angebauten Zustand quer zu den Tragrahmen 110, 111 ausgerichteten zweiten Schenkel 242, 252 auf. Das Befestigungselement 20, 21 ist hier gegenüber der Ausgestaltung von Fig. 2 mit dem freien Ende 203, 213, seines ersten Teils 201, 211 abgewinkelt ausgebildet und über diesen abgewinkelten Schenkel mit dem zweiten Schenkel 242, 252 des Verbindungselements 24, 25 verbunden.

Ein Winkelprofil 26 zwischen dem zweiten Teil 202, 212 des Befestigungselementes 20, 21 und dem ersten Schenkel 240, 250 des Verbindungselements 24, 25 kann ebenfalls vorgesehen sein, wobei das Winkelprofil 26 beispielsweise fest mit dem Befestigungselement 20, 21 verschweißt oder verschraubt sein kann, wobei der freie Schenkel des Winkelprofils 26 sowie das abgewinkelte freie Ende 203, 213 des ersten Teils 201, 211 des Befestigungselements 20, 21 mit Durchgangslöchern versehen sein kann, die mit entsprechend angepaßten Durchgangslöchern der beiden Schenkel 240, 250; 242, 252 des Verbindungselements 24, 25 in Abhängigkeit des Abstandes der beiden Tragrahmen 110, 111 angepaßt und verschraubt und/oder gegebenenfalls verschweißt werden können, so daß über diese variable Gestaltungsmöglichkeit bei unterschiedlich weit voneinander beabstandeten Tragrahmen 110, 111 eine leichte Anpassung möglich ist und auch auf einfache Weise Herstellungstoleranzen ohne Schwierigkeiten überbrückt werden können.

Eine noch elegantere Lösung ist in den Figuren 1 und 4 dargestellt, bei der die Befestigungselemente 20, 21 mit dem Tragrahmen 110, 111 des Fahrzeugs 11 über klauenartig ausgestaltete Klemmelemente 22, 23 befestigt sind. Die klauenartig ausgestalteten Klemmelemente 22, 23 greifen über horizontale Stege 112, 113 der regelmäßig U-förmigen Tragrahmenträger des Fahrzeugs, die beide im wesentlichen den Tragrahmen bilden, und können mittels hier nicht gesondert dargestellter Schraubklemmenverbindungen lösbar befestigt werden.

Da das Anheben und Absenken der Ladebordwand 15 mittels des erfindungsgemäßen Ladebordwandsystems 10 auf an sich bekannte Weise ebenso wie das Verklappen der Ladebordwand aus einer vertikalen in eine horizontale Stellung auf an sich bekannte Weise erfolgt, dem Fachmann also bekannt ist, wird hier auf diesen Betätigungsvorgang sowie die Steuerung der Hubzylindereinrichtung 16 und der Klappzylindereinrichtung, die hydraulisch und/oder elektrisch betätigt werden können, nicht weiter eingegangen.

### Bezugszeichenliste

- 10: Ladebordwandsystem
- 11: Fahrzeug
- 110: Tragrahmen
- 111: Tragrahmen
- 12: Hub- und Klapptragwerk
- 112: horizontaler Steg
- 113: horizontaler Steg
- 13: erstes Tragwerk
- 130: erster Tragarm
- 131: erster Tragarm
- 132: erste Drehachse
- 133: zweite Drehachse
- 134: zweiter Tragarm
- 135: erstes Ende
- 136: zweites Ende
- 137: Drehachse
- 138: Mittelebene
- 14: zweites Tragwerk
- 140: erster Tragarm
- 141: erster Tragarm
- 142: erste Drehachse
- 143: zweite Drehachse
- 15: Ladebordwand
- 16: Hubzylindereinrichtung
- 160: erstes Ende
- 161: zweites Ende
- 162: Drehachse
- 17: Klappzylindereinrichtung
- 170: erstes Ende
- 171: zweites Ende
- 172: Drehachse
- 173: Längsachse
- 174: Drehachse
- 18: Ebene (erstes Tragwerk)
- 19: Ebene (zweites Tragwerk)
- 20: Befestigungselement
- 200: Knick- oder Kantlinie
- 201: erstes Teil
- 202: zweites Teil
- 203: freies Ende
- 21: Befestigungselement
- 210: Knick- oder Kantlinie
- 211: erstes Teil
- 212: zweites Teil
- 213: freies Ende
- 22: Klemmelement
- 23: Klemmelement
- 24: Verbindungselement
- 240: erster Schenkel
- 241: freies Ende
- 242: zweiter Schenkel
- 25: Verbindungselement
- 250: erster Schenkel
- 251: freies Ende
- 252: zweiter Schenkel
- 26: Winkelprofil
- 27: Winkelprofil
- 28: Verbindungselement
- 280: Anschlüßelement
- 281: Anschlüßelement

## Patentansprüche

1. Ladebordwandsystem (10) zur Befestigung an Fahrzeugen (11), insbesondere Lastkraftfahrzeugen, umfassend jeweils ein im wesentlichen parallelogrammförmiges, aus zwei im wesentlichen parallel voneinander beabstandeten Tragwerken (13, 14) bestehendes Hub- und Klapptragwerk (12), eine im wesentlichen plattenförmige Ladebordwand (15) zum Heben und Absenken einer Last und zum Verschließen eines Stauraumes des Fahrzeuges (11) und eine Hubzylindereinrichtung (16) zum Heben und Senken der Ladebordwand (15) sowie eine Klappzylindereinrichtung (17) zum Verschwenken der Ladebordwand (15) von der Horizontalen in die Vertikale und umgekehrt, wobei das erste Tragwerk (13) wenigstens einen Tragarm (130; 131) umfaßt, der über eine erste Drehachse (132) am Fahrzeug (11) drehbar befestigt ist und wobei ein zweites Ende (161) der Hubzylindereinrichtung (16) über eine Drehachse (162) drehbar am Fahrzeug (11) befestigt ist, **dadurch gekennzeichnet, daß** der Tragarm (130; 131) über eine zweite, am gegenüberliegenden Ende des Tragarms (130; 131) angeordnete zweite Drehachse (133) mit dem ersten Ende (160) der Hubzylindereinrichtung (16) befestigt ist und der Tragarm (130; 131) mit einem Tragarm (140; 141) des zweiten Tragwerks (14) über ein Verbindungselement (28) verbunden ist.

2. Ladebordwandsystem nach Anspruch 1, **dadurch gekennzeichnet, daß** das Verbindungselement (28) über ein am Tragarm (130; 131) des ersten Tragwerks (13) und/oder über ein am Tragarm (140, 141) des zweiten Tragwerks (14) befestigtes Anschlußelement (280; 281) befestigt ist.

3. Ladebordwandsystem nach einem oder beiden der Ansprüche 1 oder 2, **dadurch gekennzeichnet, daß** das Verbindungselement (28) zusätzlich die Funktion eines Unterfahrschutzes hat.

4. Ladebordwandsystem nach einem oder mehreren der Ansprüche 1 bis 3, **dadurch gekennzeichnet, daß** die Kräfteeinleitungspunkte der Hubzylindereinrichtung (16) und/oder der Klappzylindereinrichtung (17) in das Hubund Klapptragwerk (12) in den durch die Drehpunkte A₁, C₁, D, E₁ bzw. A₂, B, C₂, E₂ gebildeten Ebenen (18, 19) der Elemente des jeweiligen ersten und/oder zweiten Tragwerks (13, 14) liegen, in der die Hubzylindereinrichtung (16) des ersten Tragwerks (13) und/oder die Klappzylindereinrichtung (17) des zweiten Tragwerks (14) in bezug auf die von ihnen auf das Tragwerk (13) bzw. in dem Tragwerk (14) ausgeübten Kräfte einwirken.

5. Ladebordwandsystem nach einem oder mehreren der Ansprüche 1 bis 4, **dadurch gekennzeichnet, daß** das erste Tragwerk (13) zwei im wesentlichen parallel voneinander beabstandete erste Tragarme (130, 131) umfaßt.

6. Ladebordwandsystem nach einem oder mehreren der Ansprüche 1 bis 5, **dadurch gekennzeichnet, daß** das erste Tragwerk (13) einen zweiten Tragarm (134) umfaßt, der an seinem ersten Ende (135) mit den beiden ersten Tragarmen (130, 131) verbunden ist, wobei das zweite Ende (136) eine im wesentlichen orthogonal zu den beiden ersten Tragarmen (130, 131) verlaufende Drehachse (137) aufweist, über die der zweite Tragarm (134) drehbar mit der Ladebordwand (15) befestigt ist.

7. Ladebordwandsystem nach Anspruch 6, **dadurch gekennzeichnet, daß** der zweite Tragarm (134) im wesentlichen in der Mittelebene (138) zwischen den beiden ersten Tragarmen (130, 131) ausgebildet ist.

8. Ladebordwandsystem nach einem oder mehreren der Ansprüche 1 bis 7, **dadurch gekennzeichnet, daß** das zweite Tragwerk (14) zwei im wesentlichen parallel voneinander beabstandete erste Tragarme (140, 141) umfaßt, wobei die ersten Tragarme (140, 141) über eine erste Drehachse (142) am Fahrzeug (11) drehbar befestigt sind und über eine zweite, am anderen Ende der ersten Tragarme (140, 141) angeordnete zweite Drehachse (143), die im wesentlichen orthogonal zu den ersten Tragarmen (140, 141) und parallel zur ersten Drehachse (142) verläuft, drehbar mit der Ladebordwand (15) befestigt sind.

9. Ladebordwandsystem nach einem oder mehreren der Ansprüche 1 bis 8, **dadurch gekennzeichnet, daß** die Klappzylindereinrichtung (17), die an ihrem ersten Ende (170) drehbar am Fahrzeug (11) befestigt ist, mit ihrem zweiten Ende (171) um eine Drehachse (172) im wesentlichen orthogonal zur Längsachse (173) der Klappzylindereinrichtung (17) drehbar mit der Ladebordwand (15) befestigt ist, wobei die Längsachse (173) im wesentlichen in der die Schwenkebene bildenden Ebene (19) des zweiten Tragwerks (14) verläuft.

10. Ladebordwandsystem nach einem oder mehreren der Ansprüche 1 bis 9, **dadurch gekennzeichnet, daß** die Tragarme (130, 131; 140, 141) im wesentlichen plattenförmig ausgebildet sind.

11. Ladebordwandsystem nach einem oder mehreren der Ansprüche 6 bis 10 **dadurch gekennzeichnet, daß** der zweite Tragarm (134) des ersten Tragwerks (13) im wesentlichen plattenförmig ausgebildet ist.

12. Ladebordwandsystem nach einem oder mehreren der Ansprüche 1 bis 11, **dadurch gekennzeichnet, daß** die Befestigung des ersten und des zweiten Tragwerks (13, 14) am Fahrzeug (11) über jeweils ein gesondertes Befestigungselement (20, 21) erfolgt.

13. Ladebordwandsystem nach Anspruch 12, **dadurch gekennzeichnet, daß** das Befestigungselement (20, 21) eine plattenförmige Struktur aufweist.

14. Ladebordwandsystem nach einem oder beiden der Ansprüche 12 oder 13, **dadurch gekennzeichnet, daß** das Befestigungselement (20, 21) längs einer im an das Fahrzeug (11) angebauten Zustand im wesentlichen vertikal verlaufenden Knick- oder Kantlinie (200, 210) mit einem ersten Teil (201, 211) in Richtung auf den Tragrahmen (110, 111) des Fahrzeugs (11) zu verläuft und mit einem zweiten Teil (202, 212), an dem das Tragwerk (13, 14) befestigt ist, im wesentlichen parallel zum Tragrahmen (110, 111) ausgerichtet ist, wobei zwischen beiden Teilen (201, 211; 202, 212) ein stumpfer Winkel ∝ gebildet wird.

15. Ladebordwandsystem nach einem oder mehreren der Ansprüche 12 bis 14, **dadurch gekennzeichnet, daß** das Befestigungselement (20, 21) mit dem Tragrahmen (110, 111) eines Fahrzeugs (11) Ober ein Verbindungselement (24, 25) fest verbindbar befestigbar ist.

16. Ladebordwandsystem nach Anspruch 15, **dadurch gekennzeichnet, daß** das Verbindungselement (24, 25) eine plattenförmige Struktur aufweist.

17. Ladebordwandsystem nach Anspruch 16, **dadurch gekennzeichnet, daß** das Verbindungselement (24, 25) wenigstens einen im wesentlichen quer zum Fahrzeug (11) ausgerichteten ersten Schenkel (240, 250) aufweist, wobei das Befestigungselement (20, 21) im Bereich seiner Knick- oder Kantlinie (200, 210) wenigstens mit dem freien Ende (241, 251) des Schenkels (240, 250) verbunden ist.

18. Ladebordwandsystem nach Anspruch 17, **dadurch gekennzeichnet, daß** das Verbindungselement (24, 25) einen im wesentlichen quer zum Fahrzeug (11) ausgerichteten zweiten Schenkel (242, 252) aufweist, wobei das Befestigungselement (20, 21) mit dem freien Ende (203, 213) seines ersten Teils (201, 211), das abgewinkelt ausgebildet ist, mit dem zweiten Schenkel (242, 252) verbunden ist.

19. Ladebordwandsystem nach einem oder mehreren der Ansprüche 12 bis 14, **dadurch gekennzeichnet, daß** die Befestigungselemente (20, 21) mit dem Tragrahmen (110, 111) eines Fahrzeugs (11) über klauenartig ausgestaltete Klemmelemente (22, 23), die über horizontale Stege (112, 113) des Tragrahmens (110, 111) des Fahrzeugs (11) greifen, lösbar befestigbar sind.

## Claims

1. Loading tail gate system (10) which is attached to vehicles (11), in particular commercial vehicles, comprising respectively a lifting and folding support frame (12) of a substantially parallelogram-shape consisting of two substantially parallel support frames (13, 14) spaced at a distance apart, a substantially board-shaped loading tail gate (15) for raising and lowering a load and for closing off a cargo space of the vehicle (11), and a lifting cylinder mechanism (16) for raising and lowering the loading tail gate (15) as well as a folding cylinder mechanism (17) for pivoting the loading tail gate (15) from a horizontal into a vertical position and vice versa, the first support frame (13) having at least one support arm (130; 131) linked to the vehicle (11) so as to be rotatable about a first rotation axis (132), whilst a second end (161) of the lifting cylinder mechanism (16) is linked to the vehicle (11) so as to be rotatable about a rotation axis (162), **characterised in that** the support arm (130; 131) is linked to the first end (160) of the lifting cylinder mechanism (16) via a second second rotation axis (133) at the oppositely lying end of the support arm (130; 131) and the support arm (130; 131) is joined to a support arm (140; 141) of the second support frame (14) via a connecting element (28).

2. Loading tail gate system as claimed in claim 1, **characterised in that** the connecting element (28) is fixed via a connector element (280; 281) on the support arm (130; 131) of the first support frame (13) and/or on the support arm (140, 141) of the second support frame (14).

3. Loading tail gate system as claimed in one or both of claims 1 or 2, **characterised in that** the connecting element (28) additionally fulfils the function of an under-run guard.

4. Loading tail gate system as claimed in one or more of claims 1 to 3, **characterised in that** the points of the lifting cylinder mechanism (16) and/or the folding cylinder mechanism (17) from which forces are transmitted into the lifting and folding support frame (12) are disposed in the planes (18, 19) formed by the points of rotation A₁, C₁, D, E₁ and respectively A₂, B, C₂, E₂ of the elements of the respective first and/or second support frame (13/ 14) in which the lifting cylinder mechanism (16) of the first support frame (13) and/or the folding cylinder mechanism (17) of the second support frame (14) act by reference to the forces imparted by them to the support frame (13) and respectively in the support frame (14).

5. Loading tail gate system as claimed in one or more of claims 1 to 4, **characterised in that** the first support frame (13) has two substantially parallel first support arms (130, 131) spaced at a distance apart from one another.

6. Loading tail gate system as claimed in one or more of claims 1 to 5, **characterised in that** the first support frame (13) has a second support arm (134), which is linked by its first end (135) to the two first support arms (130, 131), whilst the second end (136) has an axis of rotation (137) extending essentially orthogonally with respect to the two first support arms (130, 131), by means of which the second support arm (134) is rotatably linked to the loading tail gate (15).

7. Loading tail gate system as claimed in claim 6, **characterised in that** the second support arm (134) is disposed substantially in the mid-plane (138) between the two first support arms (130, 131).

8. Loading tail gate system as claimed in one or more of claims 1 to 7, **characterised in that** the second support frame (14) has two essentially parallel first support arms (140, 141) spaced at a distance apart from one another, the first support arms (140, 141) being linked to the vehicle (11) so as to be rotatable about a first axis of rotation (142) and being linked to the loading tail gate (15) so as to be rotatable about a second second axis of rotation (143) at the other end of the first support arms (140, 141), which extends substantially orthogonally with respect to the first support arms (140, 141) and parallel with the first rotation axis (142).

9. Loading tail gate system as claimed in one or more of claims I to 8, **characterised in that** the folding cylinder mechanism (17) is attached to the vehicle (11) by its first end (170) so as to be rotatable and is attached to the loading tail gate (15) by its second end (171) so as to be rotatable about a rotation axis (172) substantially orthogonal to the longitudinal axis (173) of the folding cylinder mechanism (17), the longitudinal axis (173) extending essentially in the plane (19) of the second support frame (14) constituting the pivot plane.

10. Loading tail gate system as claimed in one or more of claims 1 to 9, **characterised in that** the support arms (130, 131; 140, 141) are of an essentially plate shaped design.

11. Loading tail gate system as claimed in one or more of claims 6 to 10, **characterised in that** the second support arm (134) of the first support frame (13) is of an essentially plate-shaped design.

12. Loading tail gate system as claimed in one or more of claims 1 to 11, **characterised in that** the first and the second support frame (13, 14) are each attached to the vehicle (11) by a separate fixing element (20, 21).

13. Loading tail gate system as claimed in claim 12, **characterised in that** the fixing element (20, 21) has a plate-shaped structure.

14. Loading tail gate system as claimed in one or both of claims 12 or 13, **characterised in that** the fixing element (20, 21) extends along a bend or edging line (200, 210), which, when mounted on the vehicle (11), extends in an essentially vertical arrangement in the direction towards the bearing frame ( 110, 111 ) of the vehicle (11) at a first part (201, 211) and at a second part (202, 212), to which the support frame (13, 14) is attached, is aligned substantially parallel with the bearing frame (110, 111), the two parts (201, 211; 202, 212) subtending an obtuse angle á.

15. Loading tail gate system as claimed in one or more of claims 12 to 14, **characterised in that** the fixing element (20, 21) can be attached to the bearing frame (110, 111) of a vehicle (11), permanently fixed via a connecting element (24, 25).

16. Loading tail gate system as claimed in claim 15, **characterised in that** the connecting element (24, 25) is of a plate-shaped structure.

17. Loading tail gate system as claimed in claim 16, **characterised in that** the connecting element (24, 25) has at least a first leg (240, 250) oriented substantially transversely to the vehicle (11) and the fixing element (20, 21) is joined at least to the free end (241, 251) of the leg (240, 250) in the region of its bend or edging line (200, 210).

18. Loading tail gate system as claimed in claim 17, **characterised in that** the connecting element (24, 25) has a second leg (242, 252) oriented substantially transversely to the vehicle (11), the fixing element (20, 21) being joined to the second leg (242, 252) by the free end (203, 213) of its first part (201, 211), which is bent back at an angle.

19. Loading tail gate system as claimed in one or more of claims 12 to 14, **characterised in that** the fixing elements (20, 21 ) are releasably attached to the bearing frame (110, 111) of a vehicle (11) by means of clamping elements (22, 23) of a jaw-type design, which engage on horizontal webs (112, 113) of the bearing frame ( 110, 111) of the vehicle (11).

## Revendications

1. Système de hayon élévateur (10) à fixer contre des véhicules (11), en particulier des camions, comprenant un cadre de levage et de pivotement (12) sensiblement en forme de parallélogramme, formé par deux consoles de support (13, 14) écartées l'une de l'autre et sensiblement parallèles, un hayon élévateur (15) sensiblement en forme de plateau, destiné à monter et abaisser une charge et à fermer un compartiment de chargement du véhicule (11), et un dispositif à vérin de levage (16) destiné à monter et abaisser le hayon élévateur (15), ainsi qu'un dispositif à vérin de pivotement (17), destiné à faire pivoter le hayon élévateur (15) d'un plan horizontal vers un plan vertical et inversement, la première console de support (13) étant formée par au moins un bras de support (130 ; 131), qui est fixé de manière rotative contre le véhicule (11) par l'intermédiaire d'un premier axe de rotation (132) et une deuxième extrémité (161) du dispositif à vérin de levage (16) étant fixée de manière rotative contre le véhicule (11) par l'intermédiaire d'un axe de rotation (162), **caractérisé en ce que** le bras de support (130 ; 131) est fixé à la première extrémité (160) du dispositif à vérin de levage (16) par l'intermédiaire d'un deuxième axe de rotation (133) agencé au niveau de l'extrémité opposée du bras de support (130 ; 131), et le bras de support (130 ; 131) est assemblé avec le bras de support (140 ; 141) de la deuxième console de support (14) au moyen d'un élément d'assemblage (28).

2. Système de hayon élévateur selon la revendication 1, **caractérisé en ce que** l'élément d'assemblage (28) est fixé au moyen d'un élément de raccordement (280) fixé contre le bras de support (130 ; 131) de la première console de support (13) et/ou au moyen d'un élément de raccordement (281) fixé contre le bras de support (140, 141) de la deuxième console de support (14).

3. Système de hayon élévateur selon une ou les deux revendications 1 ou 2, **caractérisé en ce que** l'élément d'assemblage (28) remplit en plus la fonction de protection de soutènement.

4. Système de hayon élévateur selon une ou plusieurs des revendications 1 à 3, **caractérisé en ce que** les points d'introduction des forces du dispositif à vérin de levage (16) et/ou du dispositif à vérin de pivotement (17) dans le cadre de levage et de pivotement (12) sont situés dans les plans (18, 19) formés chacun respectivement par les points de rotation A₁, C₁, D, E₁ et A₂, B, C₂, E₂ des éléments de respectivement la première et/ou la deuxième console de support (13, 14), dans lesquels le dispositif à vérin de levage (16) de la première console de support (13) et le dispositif à vérin de pivotement (17) de la deuxième console de support (14) agissent par rapport aux forces qu'ils exercent sur la console de support (13) et dans la console de support (14).

5. Système de hayon élévateur selon une ou plusieurs des revendications 1 à 4, **caractérisé en ce que** la première console de support (13) est formée par deux premiers bras de support (130 ; 131) écartés l'un de l'autre et sensiblement parallèles.

6. Système de hayon élévateur selon une ou plusieurs des revendications 1 à 5, **caractérisé en ce que** la première console de support (13) est formée par un deuxième bras de support (134), dont la première extrémité (135) est assemblée aux deux premiers bras de support (130 ; 131), la deuxième extrémité (136) étant munie d'un axe de rotation (137) qui est sensiblement perpendiculaire aux deux premiers bras de support (130 ; 131) et par l'intermédiaire duquel le deuxième bras de support (134) est fixé de manière rotative avec le hayon élévateur (15).

7. Système de hayon élévateur selon la revendication 6, **caractérisé en ce que** le deuxième bras de support (134) est réalisé sensiblement dans le plan médian (138) entre les deux premiers bras de support (130, 131).

8. Système de hayon élévateur selon une ou plusieurs des revendications 1 à 7, **caractérisé en ce que** la deuxième console de support (14) comprend deux premiers bras de support (140, 141) écartés l'un de l'autre et sensiblement parallèles, les premiers bras de support (140, 141) étant fixés de manière rotative contre le véhicule (11) par l'intermédiaire d'un premier axe de rotation (142) et étant fixés de manière rotative contre le hayon élévateur (15) par l'intermédiaire d'un deuxième axe de rotation (143), disposé sur l'autre extrémité des premiers bras de support (140, 141), lequel est sensiblement perpendiculaire aux premiers bras de support (140, 141) et parallèle au premier axe de rotation (142).

9. Système de hayon élévateur selon une ou plusieurs des revendications 1 à 8, **caractérisé en ce que** le dispositif à vérin de pivotement (17), qui est fixé par sa première extrémité (170) de manière rotative contre le véhicule (11), est fixé avec sa deuxième extrémité (171) contre le hayon élévateur (15) de manière rotative autour d'un axe de rotation (172) sensiblement perpendiculaire à l'axe longitudinal (173) du dispositif à vérin de pivotement (17), l'axe longitudinal (173) étant sensiblement situé dans le plan (19) formant le plan de pivotement de la deuxième console de support (14).

10. Système de hayon élévateur selon une ou plusieurs des revendications 1 à 9, **caractérisé en ce que** les bras de support (130, 131 ; 140, 141) sont réalisés dans une forme sensiblement plane.

11. Système de hayon élévateur selon une ou plusieurs des revendications 6 à 10, **caractérisé en ce que** le deuxième bras de support (134) de la première console de support (13) est réalisé dans une forme sensiblement plane.

12. Système de hayon élévateur selon une ou plusieurs des revendications 1 à 11, **caractérisé en ce que** la première et la deuxième console de support (13, 14) sont fixées contre le véhicule (11) chacune par l'intermédiaire d'un élément de fixation (20, 21) séparé.

13. Système de hayon élévateur selon la revendication 12, **caractérisé en ce que** l'élément de fixation (20, 21) est formé par une structure plane.

14. Système de hayon élévateur selon l'une ou les deux revendications 12 ou 13, **caractérisé en ce que** l'élément de fixation (20, 21) s'étend le long d'une ligne de pliage ou ligne en arête (200, 210), sensiblement verticale dans la position montée contre le véhicule (11), ladite ligne étant formée par une première partie (201, 211) qui s'étend en direction du cadre de support (110, 111) du véhicule (11) et par une deuxième partie (202, 212), contre laquelle est fixée la console de support (13, 14) et qui est sensiblement parallèle au cadre de support (110, 111), un angle obtus α étant formé entre les deux parties (201, 211 ; 202, 212).

15. Système de hayon élévateur selon une ou plusieurs des revendications 12 à 14, **caractérisé en ce que** l'élément de fixation (20, 21) peut être fixé de manière inamovible avec le cadre de support (110, 111) d'un véhicule (11) par l'intermédiaire d'un élément d'assemblage (24, 25) .

16. Système de hayon élévateur selon la revendication 15, **caractérisé en ce que** l'élément d'assemblage (24, 25) est formé par une structure plane.

17. Système de hayon élévateur selon la revendication 16, **caractérisé en ce que** l'élément d'assemblage (24, 25) comporte au moins une première branche (240, 250) orientée sensiblement dans le sens transversal au véhicule (11), l'élément de fixation (20, 21) étant assemblé, dans la zone de sa ligne de pliage ou ligne en arête (200, 210), au moins avec l'extrémité libre (241, 251) de la branche (240, 250).

18. Système de hayon élévateur selon la revendication 17, **caractérisé en ce que** l'élément d'assemblage (24, 25) comporte au moins une deuxième branche (242, 252) orientée sensiblement dans le sens transversal au véhicule (11), l'élément de fixation (20, 21) étant assemblé par l'extrémité libre (203, 213) de sa première partie (201, 211), qui forme un coude, avec la deuxième branche (242, 252).

19. Système de hayon élévateur selon une ou plusieurs des revendications 12 à 14, **caractérisé en ce que** les éléments de fixation (20, 21) peuvent être fixés de manière amovible avec les cadres de support (110, 111) d'un véhicule (11) par l'intermédiaire d'éléments de serrage (22, 23) conçus sous forme de pinces, qui entrent en prise avec des tiges horizontales (112, 113) du cadre de support (110, 111) du véhicule (11).
